Europäisches Patentamt

European Patent Office

Office européen des brevets

(11) Publication number : **0 472 496 A2**

## (12) EUROPEAN PATENT APPLICATION

(21) Application number : **91810639.4**

(22) Date of filing : **13.08.91**

(51) Int. Cl.$^5$ : **B29D 11/00, G02C 7/02**

(30) Priority : **20.08.90 US 569605**

(43) Date of publication of application :
**26.02.92 Bulletin 92/09**

(84) Designated Contracting States :
**AT BE CH DE DK ES FR GB GR IT LI LU NL SE**

(71) Applicant : **CIBA-GEIGY AG**
**Klybeckstrasse 141**
**CH-4002 Basel (CH)**

(72) Inventor : **Auten, Richard D.**
**5960 Rolling Oaks Lane**
**Cumming, GA 30130 (US)**
Inventor : **Durbin, Deborah A.**
**4331 Berkeley Lake Road**
**Duluth, GA 30136 (US)**
Inventor : **Lindley, Karen R.**
**11400 Boxford Place,**
**Alpharetta GA 30201 (US)**

(54) **Method of producing a contact lens and contact lens produced thereby.**

(57) A method of making a molded contact lens including the steps of applying a marking indicia ink formulation comprising a dye selected from the group consisting of a reactive dye and a vat dye in a desired pattern onto a lens molding surface of a contact lens mold ; allowing the ink formulation to dry on the mold surface ; adding contact lens forming material to the mold, the printed ink formulation being substantially insoluble in the lens forming material ; forming the lens in the mold to obtain a lens in zerogel form bearing the marking indicia ; and placing the zerogel lens in an activating medium to allow the dye from said ink formulation to become fast with the lens and transforming the lens into the hydrogel form bearing the indicia.

_Fig. 2_

EP 0 472 496 A2

The present invention relates to a method for the production of a contact lens and to the contact lens obtainable by the said method.

A large number of methods for the production of contact lenses are available. Certain of these methods involve the tinting of the lens or the placing of marking indicia thereon. This can be accomplished for cosmetic reasons, for example, to achieve an apparent change in the natural color of the iris of the eye of the contact lens wearer. Alternatively, marking indicia is sometimes useful in labeling contact lenses with "L" or "R" for left and right, and for placing symbols or numbers on the periphery of the lens, for example, the placement of a trademark thereon. Also attempts have been made to paint or print on the lens, markings which simulate the natural iris of the eye in as much detail as possible. This is of particular value in attempting to mask the natural color of the iris of the eye of the wearer when providing a lens which is designed to change the apparent color of the iris of the lens wearer.

A number of methods have been proposed for tinting or otherwise marking contact lenses. Typically, the methods involve placing the indicia onto an existing contact lens. However, these methods are very labor intensive and involve the lenses being handled numerous times during the marking process which causes a high rejection rate, as well as an increase in the cost of making each finished lens. Furthermore, in the case of tinted lenses, the presently known methods do not result in the formation of a naturally appearing iris.

U.S. Patents No. 4,811,662 and No. 4,719,657 disclose a method for placing an iris patterned print directly onto a hydrated contact lens using transfer printing technology. This method does indeed reduce the handling associated with the production of a tinted contact lens and produces a realistic iris patterned cosmetic tint on said lens.

There are other U.S. Patents (Nos. 4,582,402, 4,668,240 and 4,704,017) which describe a method and process for using transfer print technology to produce an opaque or a colored contact lens. Again, these patents teach the method of printing on the finished, hydrated contact lens.

U.S. Patent No. 4,640,805 discloses a method for preparing a cosmetically tinted or colored opaque contact lens via placing a colorant (D&C colors, or daylight fluorescent colors) on the mold surface, adding liquid contact lens monomer, said liquid lens monomer being allowed to dissolve the colorant layer. The colorant layer, dissolved by the contact lens monomer, is then allowed to polymerize with the contact lens monomer.

Inherent disadvantages of this method are that by allowing the colorant layer to be dissolved by the liquid lens monomer, the resulting contact lens will have a colored or tinted portion which is not well defined. The transition from the tinted or colored portion to the clear portion will be gradual instead of distinct, which is undesirable.

A second disadvantage of the above patent is that when D&C colorants are used with hydrogel contact lenses, the colors quickly leach out of the hydrated contact lenses. They are indeed trapped in the matrix of the contact lens immediately after polymerization in the zerogel state, but upon hydration, the pores of the contact lens are enlarged, thus allowing the unbound D&C dyes to leach out.

Therefore, there exists a need for a tinted or otherwise marked contact lens which is economically produced by a molding process.

There exists a further need for such a lens on which the marking indicia can provide fine details, such as a naturally appearing iris, a distinct solid or clear pupil circular pattern, or any other desirable marking indicia.

There exists a still further need for a method of producing such a contact lens which eliminates much of the physical handling heretofore associated with producing a lens having marking indicia thereon.

There exists a still further need for a method of producing such a lens which can adequately be incorporated into a standard single side mold or double side mold production technique.

The present invention provides a method for the formation of a tinted or otherwise marked hydrogel contact lens and a hydrogel contact lens obtainable according to said method.

According to the process an ink formulation is applied to a lens molding surface of a contact lens mold in a desired pattern. The ink formulation comprises a dyestuff selected from the group consisting of one or more of a reactive dyestuff and one or more of a vat dyestuff and is formulated so that when dried it is substantially insoluble in the lens forming material. The ink formulation is then dried on the lens molding surface. The lens molding surface bearing the dried ink formulation is then brought into contact with liquid hydrogel contact lens forming material and there is formed a hydrogel contact lens in its zerogel state which is tinted or otherwise marked. The said contact lens in its zerogel state is then brought into contact with an aqueous fixing medium to fix the tinting or marking and to transform the zerogel to the hydrogel form.

The method provides a molded contact lens having finely detailed marking indicia thereon. The method can be used also to produce a solid or clear pupil circular patterm. The process eliminates much of the handling which has, in the past, been used in tinting or other lens marking processes and, therefore, provides a quicker and more inexpensive process for producing tinted contact lenses. The method particularly provides a means for manufacturing a contact lens having a tinted, naturally appearing iris portion.

Furthermore, it provides an inexpensive way for contact lens manufacturers to place logos or other identifying indicia onto the lens during a standard manufacturing process.

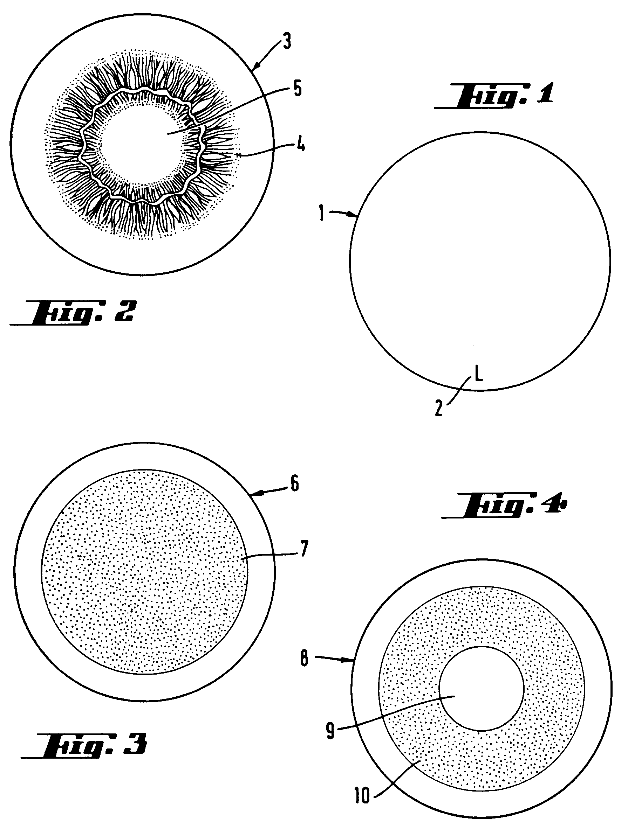

Fig. 1 is a front elevational view of a contact lens (1) having marking indicia (2) thereon, according to the present invention;

Fig. 2 is a front elevational view of a contact lens (3) having a natural appearing iris pattern (4) and a clear pupillary area (5), according to the present invention;

Fig. 3 is a front elevational view of a contact lens (6) having a solid tinted circular pattern (7), according to the present invention; and

Fig. 4 is a front elevational view of a contact lens (8) having a clear pupil circular pattern (9) and a tinted iris portion (10), according to the present invention.

In carrying out the invention, there is first prepared a marking indicia ink formulation. The ink formulation is preferably composed of a dye, a surfactant and a film forming agent in a solvent. The formulation is prepared such that when dried it is substantially insoluble in the contact lens forming material.

The dye to be employed is a reactive or vat dye. Examples of reactive dyes which may be used include, but are not limited to, those disclosed in U.S. Patent No. 4,553,975 to Su which is incorporated herein by reference. This patent discloses specific examples of reactive dyes taken from The Color Index, Vol. 5, 3rd Ed. (2nd Rev., 1982). Other reactive dyes can, of course, be employed. Suitable vat dyes which may be employed include, but are not limited to, Vat Orange 1 (C.I. 59105), Vat Blue 6 (C.I. 69825), Vat Green 1 (C.I. 59825), and Vat Brown 1 (C.I. 70800). In the case of solid dyes, it is preferable to dissolve the dye in a solvent such as water, glycerin or other suitable medium prior to formulating with the other components of the ink formulation.

The ink formulation also preferably includes a surfactant which serves as a bridge between the typically hydrophobic mold and the typically hydrophilic ink so as to prevent beading of the ink formulation on the mold. The choice of surfactant will depend upon the material from which the mold is made. For example, if the mold is made of polypropylene, the surfactant is preferably a soap, i.e. an alkali metal salt of a higher fatty acid, preferably sodium oleate or FC171, a product of 3M Corporation. Furthermore, the surfactant may be omitted from the ink formulation altogether if the mold material has sufficient surface energy to prevent the de-wetting of the ink formulation.

The ink formulation also preferably includes a film forming agent which provides viscosity to the ink formulation and which acts to evenly distribute the ink over the mold surface, thereby allowing the ink formulation to dry and remain in the desired pattern until the lens forming material polymerizes. Examples of suitable film forming agents include, but are not limited to, polyvinylpyrrolidone (PVP), polyvinyl alcohol (PVA), sodium alginate, corn starch, hydroxy ethyl cellulose, methyl cellulose and derivatives thereof.

The following are examples of preferred ink formulations which have been found to be useful in conjunction with a polypropylene mold:

Example 1: 12 g of dry PVP are dissolved along with 0.5 g of sodium oleate in 5 g of water. The mixture is stirred. 0.5 g of dye (Reactive Blue 19, C.I. 61200) and 5 g of water are added to the mixture, which is then stirred again. The final mixture is then left standing for a short period of time so that gas entrapped during the dissolution phase is allowed to escape. The resultant ink formulation may then be placed onto the contact lens mold surface in the manner described herein.

Example 2: Using the procecure of Example 1, 10 g of 45% aqueous PVP are mixed with 0.5 g of sodium oleate and 5 g of water. 1 g of soluble Vat Blue 6 (C.I. 69825) is added to the mixtwe to form the ink formulation.

Example 3: Using the procedure of Example 1, 10 g of 45% aqueous PVP are mixed with 0.5 g of sodium oleate and 5 g of water. 1.5 g of Reactive Blue 19, (C.I. 61200) are added to the mixture to form the ink formulation.

The ink formulation is then applied to a lens molding surface of the contact lens mold. It may be applied to the convexed or concaved surface of the mold. The preferred method of applying the ink formulation to the mold surface is indirect gravure. A desired pattern, such as a naturally appearing iris, is etched onto a preferably horizontal metal plate, or other suitable substrate. The etched pattern is filled with the ink formulation and any excess ink is removed from the plate via a doctor blade. A printing pad is then pressed temporarily against the pattern, so that all the ink formulation is transferred from the etched pattern to the pad. The pad is then contacted against the lens molding surface of the mold sufficiently so that all the ink formulation comes in contact with and thereby transfers to the mold surface. The pad is preferably made of an impervious elastomeric material such as silicone. Each mold may be mounted individually on a chuck or spindle, or a series of molds may be placed onto a conveyor which may be passed through a printing stage wherein the ink formulation is applied to each mold.

Satisfactory machines for performing the printing task are known in the art for printing other articles and are readily adaptable to the instant process. These machines quickly repeat the steps of filling the dye formulation into an etched portion of a flat plate while a silicone rubber pad alternates between one station at which the pad is pressed against the plate to pick up the pattern, and a second station at which it presses against the mold to transfer the pattern. Other methods of providing the ink formulation in a preferred pattern may also be used, such as flexography, wherein a negative of the desired pattern is formed on the raised area of a printing pad, and jet printing wherein the ink formulation is sprayed through a number of small diameter orifices which are spaced in the desired pattern, onto the mold surface, or screen printing.

Once applied, the ink formulation is allowed to dry on the mold surface. After the formulation is dry, contact lens forming material is added to the mold according to sandard molding procedures. The composition of the contact lens forming material can vary within wide limits, the only requirement being that the printed ink formulation is not substantially soluble in the lens forming material. Particularly suitable as monomers for this purpose are hydroxyalkyl esters of polymerizable unsaturated acids, such as acrylic, methacrylic, itaconic, fumaric and maleic acids. Among such esters, hydroxyethylmethacrylate (HEMA) has been used quite extensively in manufacturing contact lenses. Lenses prepared from such materials are disclosed, for example, in U.S. Patent Nos. 2,976,567 and RE 27,401. Therefore, the present invention allows for the possibility of utilizing both materials already available as well as novel contact lens materials yet to be developed or marketed.

Once in the mold, the contact lens monomers are allowed to polymerize or otherwise form a contact lens in its zerogel state. During the contact lens polymerization step, the ink formulation will attach to the lens structure and a lens in its zerogel state will be formed. This lens in the zerogel state bearing the ink formulation is then advantageously removed from the mold.

The zerogel lens is then contacted with an activating medium, e.g. placed into such activating medium (or fixing medium) to allow the dye in the ink formulation to become fast with the lens. The activating medium may be a strong base to cause a reactive dye to attach to the hydroxyl groups of e.g. HEMA lens material, if present, or to other reactive groups of the lens material, such as hydroxy, amino, amido or mercapto groups. Or the activating medium may be an oxidizing medium, e.g. an oxidizing solution, if vat dyes are used. Activating media for reactive dyes include, for example, trisodium phosphate, sodium carbonate, sodium bicarbonate, and sodium hydroxide. Activating media for vat dyes include, for example, a sulfuric acid and sodium nitrite solution, as well as acidic hydrogen peroxide. Of course, other activating media may also be used. Upon removal of the lens from the activating medium the dye is firmly attached to the contact lens material and exhibits excellent color fastness to all types of sterilization and storage solutions currently used for contact lenses.

Following the activating step whereby the tinting or marking has been fixed to the contact lens, the lens may be extracted or rinsed to remove any unreacted dyestuff and other unreacted material. The choice of solvent for extracting or rinsing is dependent upon the solubility of the particular dyestuff. For the majority of dyestuffs set forth above, lower alcohols such as methanol are suitable solvents. Saline, glycerin or water typically may also be used, especially if methanol is not suitable. After the extraction process, the lens is freed of traces of solvent, for example by boiling in physiological saline. This is the final step in the transformation of the lens in its zerogel state to the hydrogel form of the lens bearing the requisite marking indicia.

The indicia applied to the contact lens in accordance with the invention can be applied within or without the optical zone (OZ). The OZ of the contact lens is that surface which is responsible for the optical power of the lens. Thus, indicia such as "L" or "R" to signify left or right or a trademark indication would not generally be placed on the lens within the OZ.

The molding process used in the invention is that which is standard in the art. A single side mold with an optional lathing step, or a double side mold process can be employed. In one embodiment the mold preferably includes a convexed lens molding surface which is used in providing the base curve surface of the final lens.

## Claims

1. A method for the formation of a tinted or otherwise marked hydrogel contact lens which comprises
   a) applying an ink formulation to a lens molding surface of a contact lens mold, said ink formulation comprising a dye selected from the group consisting of a reactive dyestuff and a vat dyestuff and being formulated such that when dried it is substantially insoluble in the lens forming material,
   b) drying the said ink formulation on said lens molding surface,
   c) bringing the lens molding surface being said dried ink formulation into contact with liquid hydrogel contact lens forming material and forming a hydrogel contact lens which is tinted or otherwise marked in its zerogel state,
   d) bringing the said contact lens in its zerogel state, after an optional lathing step for lenses produced via a single side mold, into contact with an aqueous fixing medium to fix the tinting or marking to the contact lens and to transform the zerogel to the hydrogel form.

2. The method of claim 1, further comprising the step of extracting or rinsing said lens for an effective period of time following the step of placing said lens in a fixing medium.

3. The method of claim 1, wherein said ink formulation includes an effective amount of a surfactant.

4. The method of claim 1, wherein said ink formulation includes an effective amount of a film forming agent.

5. The method of claim 1, wherein the dye of said ink formulation contains a reactive dye.

6. The method of claim 1, wherein the dye of said ink formulation contains a vat dye.

7. The method of claim 3, wherein said surfactant is sodium oleate.

8. The method of claim 4, wherein said film forming agent is selected from the group consisting of polyvinylpyrrolidone, polyvinyl alcohol, sodium alginate, corn starch, hydroxy ethyl cellulose, methyl cellulose and derivatives thereof.

9. The method of claim 1, whrein the step of applying the ink formulation to a lens molding surface of said contact lens mold comprises the steps of:
   aa) applying said ink formulation in a predetermined pattern onto a pad means; and
   ab) pressing said pad means against said mold to transfer said ink formulation to said mold in said pattern.

10. The method of claim 9, wherein said pad means is an impervious elastomeric body having a smooth surface, and said applying step comprises placing the ink formulation into said pattern on an etched plate means and contacting said elastomeric body against said pattern.

11. The method of claim 1, wherein said ink formulation further comprises a solvent in which said dye is dissolved.

12. The method of claim 1, wherein said ink formulation comprises effective amounts of low molecular weight polyvinylpyrrolidone, water, a dye, and a surfactant.

13. The method of claim 1, wherein said mold is a single side mold.

14. The method of claim 1, wherein said mold is a double side mold.

15. The method of claim 1, wherein said dye of said ink formulation is a reactive dye and said fixing medium is strongly basic.

16. The method of claim 1, wherein said dye of said ink formulation is a vat dye and said fixing medium is an oxidizing solution.

17. A tinted or otherwise marked contact lens obtainable according to the method of claim 1.

18. A tinted or otherwise marked contact lens produced according to the method of claim 1.

Fig. 1

Fig. 2

Fig. 3

Fig. 4